# EUROPÄISCHE PATENTSCHRIFT

(11) **EP 1 582 460 B1**
(45) Veröffentlichungstag und Bekanntmachung des Hinweises auf die Patenterteilung: **26.07.2006**
(21) Anmeldenummer: 05006507.7
(22) Anmeldetag: 24.03.2005
(51) Int. Cl.: B64G 1/22, B64G 1/64

(54) **Vorrichtung zur Übertragung von Lasten**
Load transmission device
Dispositif pour la transmission de charges

(30) Priorität: 03.04.2004 DE 102004016593
(43) Veröffentlichungstag der Anmeldung: 05.10.2005
(73) Patentinhaber: EADS Space Transportation GmbH, 28199 Bremen (DE)
(72) Erfinder: Retat, Ingo, Dr., 28832 Achim (DE); Börchers, Günter, 28865 Lilienthal (DE); Groth, Volker, 28539 Bremen (DE); Tritsch, Wolfgang, 28201 Bremen (DE)
(74) Vertreter: Hansmann, Dierk

(56) Entgegenhaltungen:
- DE-C1- 19 850 699
- US-A- 4 964 596
- US-A- 5 848 766
- UWE PAPE, MANFRED OTT, CORNELIUS SCHEPKER: "IAC-03-T.P. 03 : ICC - The Unpressurized Cargo Carrier Family" 54TH INTERNATIONAL ASTRONAUTICAL CONGRESS, 29. September 2003 (2003-09-29), XP002333832 BREMEN, D
- MENZEL A P: "Safety lessons learned from the Integrated Cargo Carrier (ICC) logistics missions to ISS" JOINT ESA-NASA SPACE-FLIGHT SAFETY CONFERENCE, ESA SP-486, [Online] August 2002 (2002-08), Seiten 255-262, XP002333833 Gefunden im Internet: URL:http://articles.adsabs.harvard.edu/cgi -bin/nph-iarticle_query?2002sfs..conf..255 M&data_type=PDF_HIGH&type=PRINTER& amp;filetype=.pdf> [gefunden am 2005-06-22]
- "Spacehab Receives $10.5 Million Follow-On Contract With Boeing For Space Cargo Services"[Online] 30. November 2000 (2000-11-30), XP002333834 Gefunden im Internet: URL:http://www.spacehab.com/news/2000/00_1 1_30.htm> [gefunden am 2005-06-22]

## Beschreibung

Die Erfindung betrifft eine Vorrichtung zur lösbaren Halterung von Nutzlastpaletten in der Ladebucht eines Raumtransporters mit X-, Y- und Z-Achsen, wobei diese Vorrichtung lösbare Klammern zur Fixierung der Palette in X- und Y-Richtung des Raumtransporters an der festen Struktur des Raumtransporters und eine jochartige Haltestruktur zur Einleitung von Kräften in Y-Richtung des Raumtransporters einschließt.

Orbitalstationen, wie die sich in einer erdnahen Umlaufbahn befindliche Internationale Raumstation ISS, müssen mit Versorgungsgütern beschickt werden, die im Fall der ISS zu einem großen Teil auf einer im Space Shuttle montierten Palette zur Orbitalstation gebracht werden. Bisher verbleibt diese Palette, auch als Unpressurized Cargo Pallet, UCP, bezeichnet, zusammen mit einer Haltestruktur, der sogenannten Keel Yoke Assembly, KYA, während der gesamten Mission im Shuttle. Die Palette ist dabei über eine jochartige Haltestruktur, die Kräfte in Y-Richtung, d.h. quer zur Ladebucht des Shuttle, aufzunehmen vermag, fest mit dem Shuttle verbunden, und eine Trennung im Orbit ist nicht möglich. Eine derartige Anordnung ist beispielsweise in der DE 198 50 669 C1 beschrieben.

Für zukünftige Missionen ist jedoch geplant, die Nutzlastpaletten ohne die zugehörige Haltestruktur aus dem Shuttle zu entnehmen und sie außen an der Raumstation anzudocken. Für derartige Fälle stellt es eine im Prinzip bereits bekannte Maßnahme dar, herausnehmbare Nutzlasten über einen Kiel-Pin oder Trunnion in X- und Y-Richtung und über wenigstens je einen Backbord- und Steuerbord-Pin in X- und Z-Richtung zu fixieren. Dann kann eine solche Nutzlast allein durch das Lösen der standardmäßig im Shuttle vorgesehenen Halteklammern gelöst, entnommen und über diese auch wieder fixiert werden. Derartige Halterungen sind unter anderem aus der EP 0 256 001 B1 sowie der US 4 303 214 bekannt geworden. Diese Art der Halterung ist jedoch dann nicht realisierbar, wenn die Möglichkeit geschaffen werden soll, auch die Unterseite einer Palette vollständig mit Nutzlasten zu bestücken, wodurch zu ihrer vollständigen Entladung im Orbit ein temporäres Aussetzen erforderlich wird. In einem solchen Fall können die Kräfte in Y-Richtung nicht, wie standardmäßig üblich, direkt von der Nutzlast über Streben in den Kiel des Shuttles geleitet werden.

Ferner ist nach dem Bericht von UWE PAPE, MANFRED OTT, CORNELIUS

SCHEPKER: "IAC-03-T.P.03:ICC - The Unpressurized Cargo Carrier Family" vor dem 54. INTERNATIONAL ASTRONAUTICAL CONGRESS am 29. September 2003 eine gattungsgemäße Vorrichtung ICC-GD bekannt geworden, die als nächstliegender Stand der Technik angesehen werden kann.

Aufgabe der Erfindung ist es daher, eine Vorrichtung der eingangs genannten Art derart auszubilden, daß es möglich ist, die zu halternde Nutzlast während der Mission aus dem Shuttle zu entnehmen und wieder einzubringen und sie zugleich während des Starts und der Landung zuverlässig zu fixieren, ohne die Unterseite der Nutzlast direkt mit der Struktur des Raumtransporters zu verbinden.

Die Erfindung löst diese Aufgabe dadurch, daß an den äußeren Enden der Haltestruktur Halteelementen angeordnet sind, an denen wenigstens zwei Wellen zur Halterung der Nutzlastpalette in Y-Richtung des Raumtransporters gehaltert sind, wobei diese Wellen mit an einander gegenüberliegenden, in Y-Richtung des Raumtransporters weisenden Seiten der lösbar zu halternden Palette angeordneten Haken in Eingriff bringbar sind, in denen jeweils eine lastübertragende Gabel um die Z-Achse des Raumtransporters drehbar gelagert ist, wobei im gehalterten Zustand der Palette die Wellen in den Gabeln in X- und Z-Richtung des Raumtransporters translatorisch bewegbar und um dessen X- und Y-Achse drehbar sind.

Die erfindungsgemäße Vorrichtung löst zugleich auch das Problem, daß an der Raumstation und im Space Shuttle extreme Temperaturen auftreten können, die ein Funktionieren im Temperaturbereich zwischen -100 °C bis +100 °C erforderlich machen. Zwischen den im Shuttle verbleibenden Elementen der Haltestruktur und der an der Raumstation befestigten Palette können sich dabei Temperaturunterschiede einstellen, die bis zu 100 K betragen können und aufgrund derer die physikalischen Dimensionen der beiden Bauteile um bis zu 10 mm variieren können. Die erfindungsgemäße Vorrichtung ist dabei in der Lage, eine Palette trotz dieser temperaturbedingten Schwankungen ihrer Abmessungen ohne zusätzliche motorische oder manuelle Antriebe für eine mögliche Rückführung auch wieder im Shuttle zu haltern.

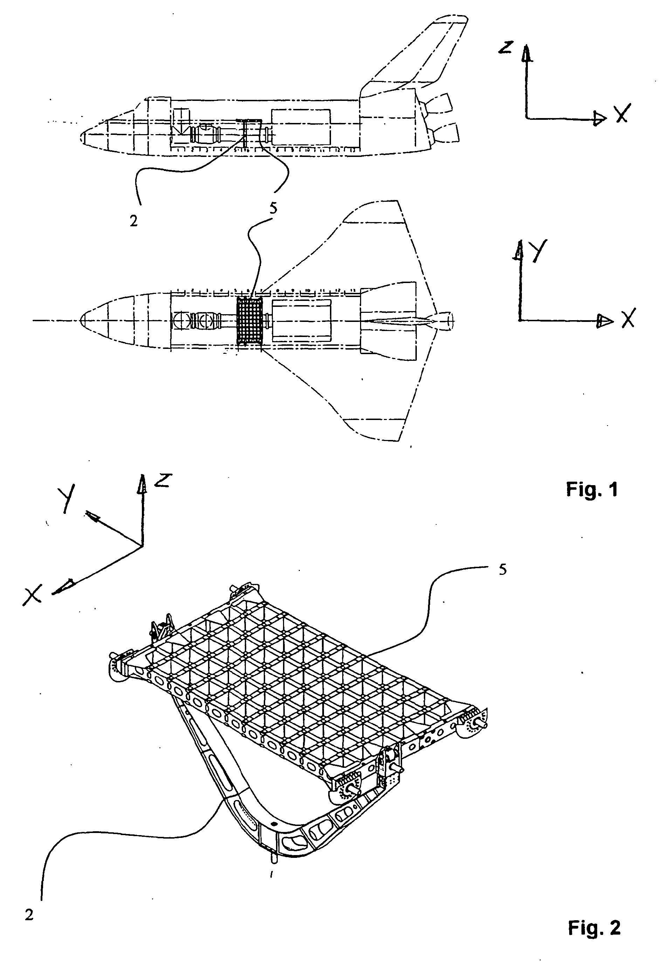

Nachfolgend soll die Erfindung anhand der Zeichnung näher erläutert werden. Es zeigen
- Fig. 1: ein im Shuttle angeordnetes Element einer Haltestruktur mit einer Nutzlastpalette,
- Fig. 2: das Element der Haltestruktur und die Lastpalette gemäß Fig. 1,
- Fig. 3: eine Detaildarstellung eines Teils der Haltestruktur gemäß Fig. 2 mit einem Halteelement,
- Fig. 4: einen an einer Nutzlastpalette angeordneten Haken,
- Fig. 5: einen vertikalen Schnitt durch ein Halteelement verbunden mit einem Haken,
- Fig. 6: eine Welle in Draufsicht und in geschnittener Darstellung,

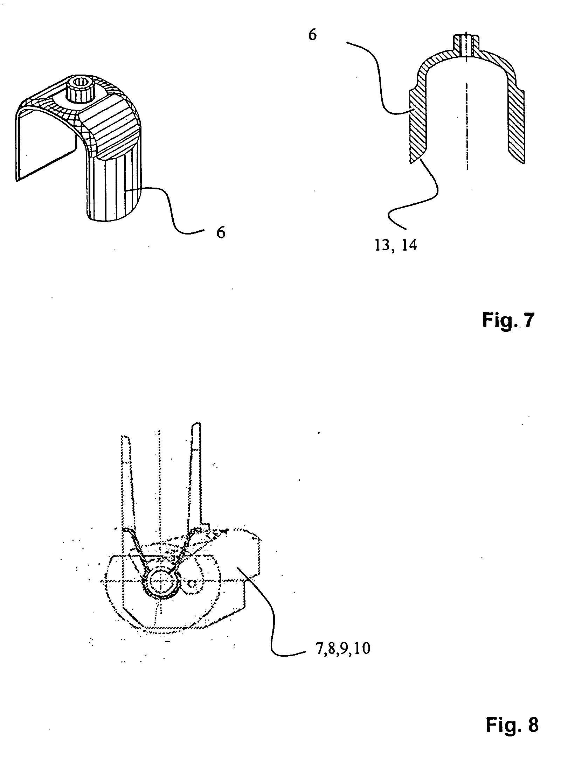

- Fig. 7: eine Gabel in perspektivischer und in geschnittener Darstellung und
- Fig. 8: einen Schnitt durch ein Payload Retention and Latching Assembly, PRLA, des Space Shuttle.

Die Haltevorrichtung besteht im Prinzip aus jeweils zwei zusammenwirkenden Komponenten, einer Welle 1, die an einem zur im Shuttle verbleibenden Haltestruktur 2 gehörenden Halteelement 3 gehaltert ist, und jeweils einem Haken 4, der an der lösbar im Shuttle zu halternden Lastplatte 5 angeordnet ist. Im Haken 4 ist eine lastübertragende Gabel 6 drehbar gelagert. Die Welle 1 kann sich in der Gabel 6 in X- und Z-Richtung bewegen. Sie läßt Drehungen um die X- und Y-Achse in der Gabel 6 zu, wobei die Gabel 6 selbst um die Z-Achse drehbar ist. Damit werden über die Haltevorrichtung selbst nur Kräfte in Y-Richtung übertragen. Die Rotationsfreiheitsgrade stellen sicher, daß die Vorrichtung unempfindlich gegenüber einem etwaigen Verkannten ist.

An jeder zu halternden Palette 5 sind, jeweils zu beiden Seiten, identische Haken 4 angebracht, die jeweils mit einem fest mit der Haltestruktur 2 verbundenen Halteelement 3 zusammenwirken. Im Fall des hier beschriebenen Ausführungsbeispiels können mit der aus diesen Komponenten bestehenden Haltevorrichtung Kräfte bis zu ca. 45000 N übertragen werden.

Die Palette 5 wird durch motorisch betriebene Klammern 7, 8, 9, 10 des Space Shuttle , die sogenannten Payload-Retention and Latching Assemblies, PRLAs, in X- und Z-Richtung fixiert, außerdem wird sie durch die Halteelemente 3 in Y-Richtung fixiert. Zum Aussetzen werden die Klammern 7, 8, 9, 10 gelöst und die Palette 5 kann das Space Shuttle aus der Öffnung der Ladebucht nach oben, d.h. in Z-Richtung, verlassen. Dabei gleitet die Welle 1 praktisch kraftfrei aus der Gabel 6. Ausdrückfedern 11 12 stellen sicher, daß die verbleibende Reibungskraft zwischen beiden Komponenten, der Welle 1 und der Gabel 6, kompensiert wird, so daß keine externen Kräfte notwendig sind.

Bei diesem Entladevorgang können die absoluten Umgebungstemperaturen zwar zwischen -100 °C und +100°C variieren, die Temperaturdifferenz zwischen der Palette und der Haltestruktur ist aber gering und beträgt im Mittel weniger als 10 K. Bei der Rückführung der Palette 5 in die Ladebucht des Space Shuttle kann es jedoch vorkommen, daß die Palette 5 im Schatten der Raumstation lag, während das Space Shuttle selbst der Sonne ausgesetzt war. Dann können zwischen der Palette 5 und der Haltestruktur im Space Shuttle Temperaturdifferenzen bis zu 100 K auftreten. In diesem Fall kann der Abstand zwischen den Halteelementen 3 in Querrichtung um ca. 10 mm größer sein als die Ausdehnung der Palette 5. Um dennoch beide Teile zusammenfügen zu können, ist die Haltestruktur 2 elastisch verformbar ausgebildet. Die zur Verformung notwendigen Kräfte in Y-Richtung werden durch die Klammern 7, 8, 9, 10 des Space Shuttle erzeugt. Durch das Schließen der Klammern 7, 8, 9, 10 wird die Palette 5 in die negative Z-Richtung gezogen, wodurch die Haltestruktur 2 über Rampen 13 14 in Y-Richtung aufgeweitet wird. Dieser Vorgang wird durch die besondere Formgebung der Haltestruktur 2 ermöglicht.

Ohne die Palette 5 ist die Haltestruktur nachgiebig ausgebildet und kann leicht aufgeweitet werden, wobei jeweils ein Arm der Haltestruktur 2 in die positive Y-, der andere in die negative Y-Richtung verschoben wird. Die aus der Haltestruktur 2 und der Palette 5 bestehende gekoppelte Struktur ist jedoch in Y-Richtung sehr steif und fixiert damit die Palette 5 sicher im Space Shuttle gegenüber den bei Start und Landung auftretenden vibrationen. Im Fall des hier beschriebenen Ausführungsbeispiels beträgt der Unterschied der Steifigkeit etwa 230 N/mm ohne die Palette 5 gegenüber etwa 10050 N/mm mit dieser Palette.

Nach der Rückführung der Palette 5 werden die Klammern 7, 8, 9, 10 erst geschlossen, wenn mittels Sensoren sichergestellt worden ist, daß die Palette 5 sich weit genug im Inneren der Ladebucht des Space Shuttle befindet, um von den Klammern 7, 8, 9, 10 eingezogen zu werden. Dabei sind keine elektrischen Sensoren vorgesehen, um elektrische Schnittstellen zu vermeiden. Statt dessen sind an den Haken 4 und an den Halteelementen 3 optische Marken 15, 16 angebracht, die mit im Shuttle installierten Kameras beobachtet werden können. Wenn diese Marken 15, 16 gegeneinander ausgerichtet sind, befindet sich die Palette 5 in der richtigen Position für das Schließen der Klammern 7, 8, 9, 10. Die optischen Marken 15, 16 sind justierbar und können damit eine durch die Position der Kameras bedingte Parallaxe ausgleichen.

Die Zuverlässigkeit einer solchen Vorrichtung ist in der bemannten Raumfahrt besonders wichtig, insbesondere, wenn ein Versagen zu einer lebensgefährlichen Situation für die Astronauten führen kann. Daher sind zusätzliche Redundanzen eingebaut, die im Fehlerfall eine manuelle Entriegelung oder Verriegelung der Vorrichtung ermöglichen.

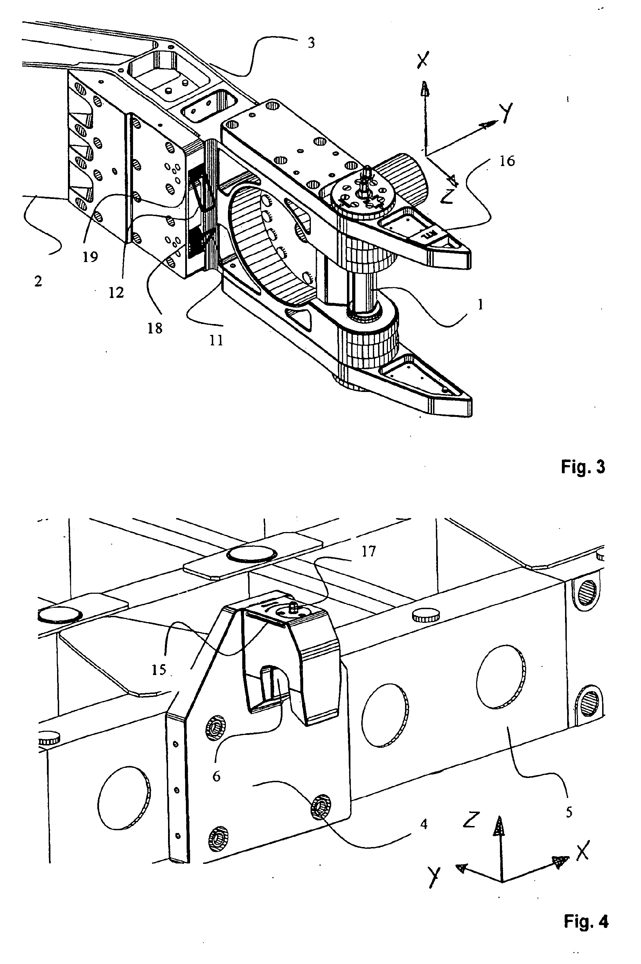

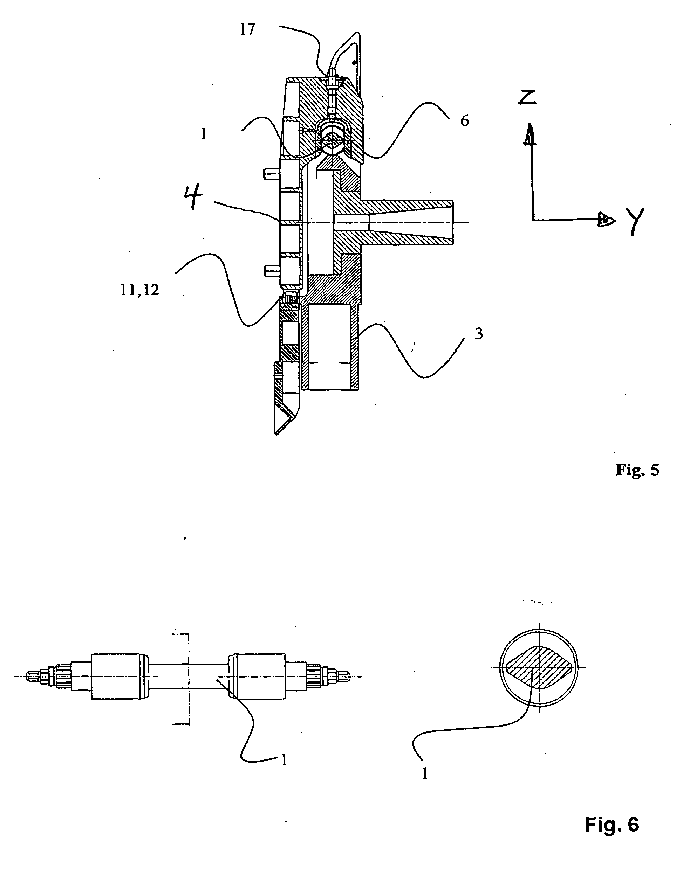

Die Welle 1 ist, wie in Fig. 4 und 5 erkennbar, nicht rund, sondern abgeflacht ausgebildet und kann im Falle eines gegenseitigen Verklemmens von Welle 1 und Lastgabel 6 verdreht werden. Dadurch vergrößert sich das Spiel zwischen diesen beiden Komponenten von 0,05 mm auf etwa 15 mm. Sofern eine Drehung nicht möglich ist, etwa weil die beiden Teile "gefressen" haben, kann die Lastgabel 6, wie in Fig. 6 dargestellt, als Ganzes ausgebaut werden. Die Gabel 6 kann dabei durch Lösen einer Schraube 17 entfernt werden und damit können beide Bauteile trotz Verklemmung gelöst werden. Die Schraube 17 bildet dabei zugleich die Drehachse der Gabel 6. In beiden Fällen kann die Palette 5 somit noch immer aus dem Shuttle entnommen werden.

Im Detail sind die Formgebungen der Welle 1 und der Gabel 6 vergleichsweise komplex, um mehreren Randbedingungen zu genügen. Dabei ist der große Radius der Welle im lastübertragenden Bereich möglich groß gewählt, um die Flächenpressung unter Belastung klein zu halten. Er darf aber nur maximal gleich dem halben Durchmesser der Welle 1 sein, damit sich diese im Fehlerfall frei drehen läßt. Der kleine Durchmesser der Welle bestimmt das Spiel im gedrehten Zustand. Der Übergang zwischen großem und kleinem Durchmesser bestimmt das maximale Drehmoment, das der Astronaut zum Öffnen oder Schließen der Verbindung aufwenden muß.

Zusammen mit den Rampen 13, 14 der Gabel 6 bestimmt der große Radius zugleich auch die Form der resultierenden Rampe, auf der die Welle 1 in die Gabel 6 gleitet. Über diese Rampe wird auch die Kraft festgelegt, die von den Klammern 7, 8, 9, 10 im Space Shuttle aufgebracht werden muß, um die Palette 5 auch bei einer großen Temperaturdifferenz zur Haltevorrichtung in das Shuttle zu ziehen und die Haltestruktur 2 dabei zu verformen. Beide Komponenten der Haltevorrichtung, d.h. die Welle 1 und die Gabel 6, sind derart optimiert, daß die Kräfte unter allen Bedingungen die maximal zulässigen Kräfte der Klammern 7, 8, 9, 10 nicht überschreiten.

Die Vorrichtung ist weiterhin mit Ausdrückfedern 11, 12 versehen, da der Roboterarm im Space Shuttle zu schwach ist, um die Reibungskräfte zwischen der Welle 1 und der Gabel 6 zu überwinden und die Palette 5 aus dem Space Shuttle zu entnehmen. Da bei derartigen Federn stets die Gefahr besteht, daß nach einem Versagen bzw. Bruch lose Teile frei in der Ladebucht umherfliegen, sind bei dem hier beschriebenen Ausführungsbeispiel die Federn 11, 12 beidseitig um Kern 18, 19 gewunden, so daß auch nach einem Federbruch keine Fragmente frei werden.

## Patentansprüche

1. Vorrichtung zur lösbaren Halterung von Nutzlastpaletten (5) in der Ladebucht eines Raumtransporters mit X-, Y- und Z-Achsen, wobei diese Vorrichtung lösbare Klammern zur Fixierung der Palette (5) in X- und Y-Richtung des Raumtransporters an der festen Struktur des Raumtransporters und eine jochartige Haltestruktur (2) zur Einleitung von Kräften in Y-Richtung des Raumtransporters einschließt, **dadurch gekennzeichnet, daß** an den äußeren Enden der Haltestruktur (2) Halteelementen (3) angeordnet sind, an denen wenigstens zwei Wellen (1) zur Halterung der Nutzlastpalette in Y-Richtung des Raumtransporters gehaltert sind, wobei diese Wellen (1) mit an einander gegenüberliegenden, in Y-Richtung des Raumtransporters weisenden Seiten der lösbar zu halternden Palette (5) angeordneten Haken (4) in Eingriff bringbar sind, in denen jeweils eine lastübertragende Gabel (6) um die Z-Achse des Raumtransporters drehbar gelagert ist, wobei im gehalterten Zustand der Palette (5) die Wellen (1) in den Gabeln (6) in X- und Z-Richtung des Raumtransporters translatorisch bewegbar und um dessen X- und Y-Achse drehbar sind.

2. Vorrichtung nach Anspruch 1, **dadurch gekennzeichnet, daß** die Haken (4) über an den Halteelementen (3) angeordnete Ausdrückfedern (11, 12) in Richtung einer Separation der Gabeln (6) von den Wellen (1) beaufschlagbar sind.

3. Vorrichtung nach Anspruch 2, **dadurch gekennzeichnet, daß** die Ausdrückfedern (11, 12) beidseitig um Kerne (18) gewickelt sind.

4. Vorrichtung nach einem der Ansprüche 1 bis 3, **dadurch gekennzeichnet, daß** die Haltestrukturelemente (2) elastisch verformbar ausgebildet sind.

5. Vorrichtung nach Anspruch 4, **dadurch gekennzeichnet, daß** die Haltestrukturelemente (2) über in die Gabeln (4) integrierte Rampen (13, 14, 11) in Y-Richtung aufweitbar sind.

6. Vorrichtung nach Anspruch 5, **dadurch gekennzeichnet, daß** die Formgebung der Rampen (13, 14) an die Kraft-Weg-Kurven der lösbaren Klammern (6, 7, 8, 9, 10) angepaßt ist.

7. Vorrichtung nach einem der Ansprüche 1 bis 6, **dadurch gekennzeichnet, daß** die Wellen (1) abgeplattet ausgebildet sind.

8. Vorrichtung nach Anspruch 7, **dadurch gekennzeichnet, daß** die Formgebung der Gabeln (6) und der Wellen (1) derart gewählt ist, daß das zum Drehen notwendige Drehmoment begrenzbar ist.

9. Vorrichtung nach einem der Ansprüche 1 bis 8, **dadurch gekennzeichnet, daß** die Gabeln (6) über Schrauben (17) lösbar in den Haken (3) gehaltert sind.

10. Vorrichtung nach Anspruch 9, **dadurch gekennzeichnet, daß** die Schrauben (17) zugleich die Drehachsen der Gabeln (6) bilden.

11. Vorrichtung nach einem der Ansprüche 1 bis 10, **dadurch gekennzeichnet, daß** zur Ermittlung der korrekten Position der zu halternden Last (5) in der Ladebucht des Raumtransporters optische Sensoren vorgesehen sind.

12. Vorrichtung nach Anspruch 11, **dadurch gekennzeichnet, daß** an der zu halternden Last (54) und an der Haltestruktur optische Marken (15, 16) angeordnet sind.

13. Vorrichtung nach Anspruch 12, **dadurch gekennzeichnet, daß** die optischen Marken (15, 16) justierbar gehaltert sind.

## Claims

1. Device for releasably retaining cargo pallets (5) in the payload bay of a space shuttle with X, Y and Z axes, which device incorporates releasable clamps for securing the pallet (5) in the X and Y direction of the space shuttle on the stationary structure of the space shuttle and a yoke-type retaining structure (2) for introducing forces in the Y direction of the space shuttle, **characterised in that** retaining elements (3) are provided at the outer ends of the retaining structure (2), to which at least two shafts (1) for retaining the cargo pallet in the Y direction of the space shuttle are secured, which shafts (1) can moved into engagement with hooks (4) disposed on oppositely lying sides, pointing in the Y direction of the space shuttle, of the pallet (5) to be releasably retained, in which a load-transmitting fork (6) is respectively mounted so as to be rotatable about the Z axis of the space shuttle, and when the pallet (5) is in the retained state, the shafts (1) can be moved into the forks (6) in translation in the X and Z direction of the space shuttle and rotated about its X and Y axis.

2. Device as claimed in claim 1, **characterised in that** pressure can be applied to the hooks (4) in which the forks (6) separate from the shafts (1) by means of ejection springs (11, 12) disposed on the retaining elements (3).

3. Device as claimed in claim 2, **characterised in that** the ejection springs (11, 12) are wound around cores (18) at both ends.

4. Device as claimed in one of claims 1 to 3, **characterised in that** the retaining structure elements (2) are of an elastically deformable design.

5. Device as claimed in claim 4, **characterised in that** the retaining structure elements (2) can be widened in the Y direction by means of ramps (13, 14, 11) integrated in the forks (4).

6. Device as claimed in claim 5, **characterised in that** the shape of the ramps (13, 14) is adapted to the force-path curves of the releasable clamps (6, 7, 8, 9, 10).

7. Device as claimed in one of claims 1 to 6, **characterised in that** the shafts (1) are of a flattened design.

8. Device as claimed in claim 7, **characterised in that** the shape of the forks (6) and the shafts (1) is selected so that the torque needed for rotation can be limited.

9. Device as claimed in one of claims 1 to 8, **characterised in that** the forks (6) are releasably retained in the hooks (3) by means of screws (17).

10. Device as claimed in claim 9, **characterised in that** the screws (17) simultaneously constitute the rotation axes of the forks (6).

11. Device as claimed in one of claims 1 to 10, **characterised in that**, in order to determine the correct position of the load (5) to be retained, optical sensors are provided in the payload bay of the space shuttle.

12. Device as claimed in claim 11, **characterised in that** visual markers (15, 16) are provided on the load (54) to be retained and on the retaining structure.

13. Device as claimed in claim 12, **characterised in that** the visual markers (15, 16) are mounted so as to be adjustable.

## Revendications

1. Dispositif pour la fixation amovible de palettes de charge utile (5) dans l'aire de chargement d'un transporteur spatial avec des axes X, Y et Z, ce dispositif comprenant des pinces amovibles pour fixer la palette (5) dans les directions X et Y du transporteur spatial sur la structure fixe du transporteur spatial, et une structure de maintien en forme d'arche (2) pour introduire des forces dans la direction Y du transporteur spatial, **caractérisé en ce que** sont aménagés, aux extrémités externes de la structure de maintien (2), des éléments de maintien (3) sur lesquels sont fixés au moins deux arbres (1) pour fixer la palette de charge utile dans la direction Y du transporteur spatial, ces arbres (1) pouvant s'engager sur des crochets (4) agencés sur des côtés de la palette à fixer de manière amovible (5) qui sont opposés l'un à l'autre et tournés dans la direction Y du transporteur spatial, dans lesquels crochets, respectivement, une fourche transmettant la charge est montée à rotation autour de l'axe Z du transporteur spatial, les arbres (1) pouvant, à l'état fixé de la palette (5), être déplacés en translation dans les directions X et Z du transporteur spatial et pouvant tourner autour de ses axes X et Y.

2. Dispositif selon la revendication 1,
**caractérisé en ce que** les crochets (4) sont sollicités via des ressorts de rappel (11, 12) aménagés sur des éléments de support (3) dans le sens d'une séparation entre les fourches (6) et les arbres (11).

3. Dispositif selon la revendication 2, **caractérisé en ce que** les ressorts de rappel (11, 12) sont enroulés des deux côtés autour de noyaux (18).

4. Dispositif selon l'une quelconque des revendications 1 à 3, **caractérisé en ce que** les éléments (2) de la structure de maintien sont déformables élastiquement.

5. Dispositif selon la revendication 4, **caractérisé en ce que** les éléments (2) de la structure de maintien peuvent être déployés dans le sens Y via des rampes (13, 14, 11) intégrées aux fourches (4).

6. Dispositif selon la revendication 5, **caractérisé en ce que** la conformation des rampes (13, 14) est adaptée aux courbes force/déplacement des pinces amovibles (6, 7, 8, 9, 10).

7. Dispositif selon l'une quelconque des revendications 1 à 6, **caractérisé en ce que** les arbres (1) présentent une forme aplatie.

8. Dispositif selon la revendication 7, **caractérisé en ce que** la conformation des fourches (6) et des arbres (1) est choisie de manière que le couple de torsion nécessaire à la rotation puisse être limité.

9. Dispositif selon l'une quelconque des revendications 1 à 8, **caractérisé en ce que** les fourches (6) sont fixées par des vis (17) de manière amovible dans les crochets (3).

10. Dispositif selon la revendication 9, **caractérisé en ce que** les vis (17) forment en même temps les axes de rotation des fourches (6).

11. Dispositif selon l'une quelconque des revendications 1 à 10, **caractérisé en ce qu'**il est prévu des capteurs optiques pour déterminer la position correcte de la charge à fixer (5) dans l'aire de chargement du transporteur spatial.

12. Dispositif selon la revendication 11, **caractérisé en ce que** des marques optiques (15, 16) sont agencées sur la charge à fixer (54) et sur la structure de maintien.

13. Dispositif selon la revendication 12, **caractérisé en ce que** les marques optiques (15, 16) sont fixées de manière ajustable.
